# EUROPÄISCHE PATENTSCHRIFT

(11) **EP 1 774 192 B1**
(45) Veröffentlichungstag und Bekanntmachung des Hinweises auf die Patenterteilung: **22.02.2012**
(21) Anmeldenummer: 05752811.9
(22) Anmeldetag: 17.06.2005
(51) Int. Cl.: F16D 7/04

(54) **RASTSCHEIBE SOWIE ÜBERLASTKUPPLUNG MIT EINER RASTSCHEIBE**
LOCKING DISK AND OVERLOAD COUPLING COMPRISING A LOCKING DISK
BAGUE D'ARRET ET EMBRAYAGE DE SURCHARGE COMPORTANT UNE BAGUE D'ARRET

(30) Priorität: 28.07.2004 DE 102004036586
(43) Veröffentlichungstag der Anmeldung: 18.04.2007
(73) Patentinhaber: Robert Bosch GmbH, 70442 Stuttgart (DE)
(72) Erfinder: VEIT, Juergen, 70771 Leinfelden-Echterdingen (DE); SAUR, Dietmar, 72810 Gomaringen (DE); HEINZELMANN, Helmut, 70567 Stuttgart (DE)
(86) Internationale Anmeldenummer: PCT/EP2005/052812
(87) Internationale Veröffentlichungsnummer: WO 2006/010673

(56) Entgegenhaltungen:
- EP-A- 1 529 701
- US-A- 2 561 136
- US-A- 2 802 354
- US-A1- 2002 179 393

## Beschreibung

### Stand der Technik

Die Erfindung geht aus von einer Rastscheibe sowie einer Überlastkupplung mit einer Rastscheibe nach dem Oberbegriff des Anspruchs 1. Eine gattungsgemäß Rastscheibe ist aus US-2802354 oder US-2561136 bekannt.

Handgeführte Werkzeugmaschinen wie Bohrhämmer und Schlaghämmer sind üblicherweise mit einer Überlastkupplung ausgestattet, die zum Schutz eines Bedieners und der Maschine beiträgt, die das maximale, auf die Maschine wirkende Drehmoment begrenzen und den Antrieb vor Kurzschlussbetrieb oder Überlastung schützen soll. Dies wird beispielsweise durch ein Unterbrechen der Drehbewegung auf das Hammerrohr bewirkt, wobei die Drehmomentübertragung durch ein Stirnradgetriebe erfolgen kann, dessen Stirnrad über eine separate Rastscheibe form-, kraft- und/oder reibschlüssig mit dem Hammerrohr verbunden ist. Die Drehmomentübertragung zwischen Stirnrad und Rastscheibe wird üblicherweise mittels Wälzkörpern oder mit Nocken in Form einer Mauenkupplung oder mit Reibelementen realisiert. Diese Art von Kupplungen benötigt eine axiale Vorspannung, welche durch Druckfedern oder Tellerfedern realisiert wird, was eine axiale Aufnahme der Kräfte durch das Hammerrohr erfordert. Aus diesem Grund ist die axiale Position der Rastscheibe durch einen Anschlag auf dem Hammerrohr begrenzt, der beispielsweise als Bund, Profil, Sprengring oder dergleichen, ausgeführt sein kann. Des Weiteren muss die Rastscheibe die Überrastkontur und/oder die Aufnahme von Wälzkörpern bilden. Der oft sehr geringe Bauraum bei Bohrhämmern und die Tatsache, dass die Überlastkupplung häufig in einem baulängebestimmenden Pfad angeordnet ist, erzwingt eine kleine und kompakte Bauweise.

### Vorteile der Erfindung

Die Erfindung geht aus von einer Rastscheibe für eine Überlastkupplung, insbesondere für eine Werkzeugmaschine. Es wird vorgeschlagen, dass die Rastscheibe eine pulvermetallurgisch gebildete Gestalt aufweist. Die Gestalt der Rastscheibe bzw. ihres Rastscheibenkörpers ist durch eine Form bei der Herstellung reproduzierbar vorgebbar. Konturen, Flächenprofile, innere und äußere Durchmesser und dergleichen sind bereits in der Form vorgeben und sind bereits bei der Herstellung auf den Rastscheibenkörper übertragbar. Heute übliche Rastscheiben sind kostenintensiv und aufwändig in der Herstellung und werden entweder aus Vollmaterial zerspant oder aus Halbzeug mit anschließender Bearbeitung geformt. Die Gestaltung einer Drehmitnahme, beispielsweise zu einem Hammerrohr, erfordert häufig eine zusätzliche Bearbeitung. Im Gegensatz dazu ist die vorgeschlagene Rastscheibe einfach auf pulvermetallurgischem Weg, beispielsweise als Sinterkörper oder durch ein Spritzverfahren, beispielsweise einen MIM-Prozess (metal injection moulding), herzustellen. Die Gestalt und Geometrie der Rastscheibe wird im Herstellprozess durch eine Form reproduzierbar vorgegeben und ermöglicht eine große Gestaltungsfreiheit. Es lassen sich gleichbleibende Materialwandstärken erzielen, auch bei komplexer Geometrie, und es kann ein kompaktes und solides Bauteil gebildet werden. Die Rastscheibe weist vorteilhaft einen Außendurchmesser mit variabel gestaltbarer Kontur auf, wodurch bei gleicher Materialwandstärke eine Festigkeitserhöhung erzielbar ist. Für eine gegebene Festigkeit kann die Materialwandstärke verringert werden, was Gewicht, Materialverbrauch und Kosten erspart. Vorzugsweise ist die Rastscheibe ringförmig ausgebildet und weist insbesondere eine im Wesentlichen gleich bleibende Materialwandstärke auf.

In einer günstigen Weiterbildung ist an einem inneren Umfang der Rastscheibe wenigstens eine Mitnahmevorrichtung für eine Drehmitnahme ausgebildet. Zweckmäßigerweise sind mehrere Mitnahmevorrichtungen umfänglich verteilt vorgesehen. Die eine oder mehrere Mitnahmevorrichtungen können als tangential angeordnete Mitnahmetaschen ausgebildet sein, in welche Mitnahmestifte eingreifen können. Alternativ können Kugelaufnahmen vorgesehen sein, in die Kugeln eingreifen können. Ebenso ist als Mitnahmevorrichtung auch ein Mitnahmeprofil denkbar. Die eine oder mehrere Mitnahmevorrichtungen können geeignet für ein jeweiliges Hammerrohr ausgewählt werden.

Günstigerweise weist die Rastscheibe an ihrem Außendurchmesser eine festigkeitserhöhende Außenkontur auf, womit eine stabile und kompakte Rastscheibe dargestellt werden kann.

In einer günstigen Weiterbildung weist die Rastscheibe auf ihrer Stirnfläche Rastnocken und/oder Vertiefungen zur Aufnahme von Wälzkörpern an der Stirnseite vorgesehen sein. Vorzugsweise sind die Rastnocken bzw. Vertiefungen und die eine oder mehrere Mitnahmevorrichtungen umfänglich gegeneinander versetzt. Dies ermöglicht eine besonders kleine und kompakte Bauweise. Ist die Rastscheibe in einer Überlastkupplung in einem baulängebestimmenden Pfad einer Werkzeugmaschine angeordnet, ergibt sich eine vorteilhaft geringe Baulänge der Werkzeugmaschine.

Weiterhin wird eine Überlastkupplung vorgeschlagen, insbesondere für eine Werkzeugmaschine, wobei eine Drehmomentübertragung von einer Antriebseinheit auf ein Werkzeug mit einer Rastscheibe unterbrechbar ist. Es wird vorgeschlagen, dass die Rastscheibe eine pulvermetallurgisch gebildete Gestalt aufweist. Die Rastscheibe ist stabil und kann in an sich beliebiger Formgebung reproduzierbar hergestellt werden, so dass sich die kompakte und zuverlässige Überlastkupplung ergibt, die leicht an verschiedene Ausführungen insbesondere eines Hammerrohrs anpassbar ist. Durch ihre Formgebundenheit ist eine hohe Reproduzierbarkeit der Rastscheibe möglich.

Eine kompakte und kleine Bauweise ergibt sich, wenn die Rastscheibe vorzugsweise an ihrer Stirnfläche Rastnocken und/oder Vertiefungen zur Aufnahme aufweist, die in ein Stirnrad eines Stirnradgetriebes eintauchen, wobei eine Laufverzahnung des Stirnrads und die Rastnocken axial übereinander liegen.

Weist die Rastscheibe an ihrem inneren Durchmesser wenigstens eine Mitnahmevorrichtung zur Drehmitnahmeverbindung mit einem Dreh- und/oder Schlagantriebsmittel auf, vorzugsweise einem Hammerrohr, kann eine zuverlässige Drehmitnahme bei einem Dreh- und/oder Schlagantrieb erzielt werden.

Bildet die Rastscheibe an ihrer umfänglichen Außenkontur im Bereich außerhalb der Rastnocken einen ähnlichen Durchmesser nach wie einem Fußkreis einer Stirnradverzahnung des Stirnrads entspricht, ergibt sich eine vorteilhafte und zuverlässige Anordnung zur Übertragung eines Auslösemoments mit einer großen Überdeckung zwischen Stirnrad und Rastscheibe.

In einem Verfahren wird vorgeschlagen, dass die Rastscheibe durch ein formgebundenes pulvermetallurgisches Verfahren gebildet wird. Bevorzugt kann die Rastscheibe durch einen gesinterten Rastscheibenkörper gebildet sein oder durch einen in einem Spritzverfahren hergestellten Rastscheibenkörper. Eine Formgebung durch Zerspanen aus dem Vollmaterial oder eine Bearbeitung eines Halbzeugs kann entfallen.

Die Erfindung ist bevorzugt für Werkzeugmaschinen, insbesondere handgeführte Werkzeugmaschinen geeignet, die drehend und/oder schlagend antreibbar sind, wie beispielsweise Bohrmaschinen, Schlagbohrmaschinen, Bohrhämmer, Meißelhämmer und dergleichen.

### Zeichnungen

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand von Zeichnungen dargestellten Aüsführungsbeispielen der Erfindung.

Im Folgenden zeigen:
- Fig. 1: eine Seitenansicht eines Schnitts eines Bohrhammers im Bereich einer bevorzugten Überlastkupplung mit einer bevorzugten Rastscheibe;
- Fig. 2: ein Detail der Überlastkupplung aus Fig.1; und
- Fig. 3: eine bevorzugte Rastscheibe aus den Fig. 1 und 2 im Detail.

### Beschreibung des Ausführungsbeispiels

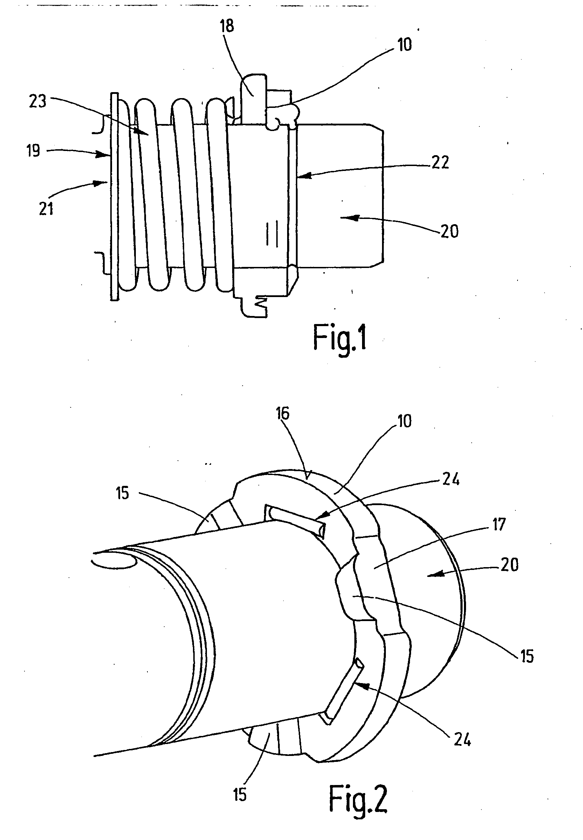

Die Figuren 1 bis 3 zeigen eine bevorzugte Rastscheibe 10 im eingebauten Zustand und als Detail für eine bevorzugte Überlastkupplung gemäß der Erfindung in unterschiedlichen Ansichten.

Die Seitenansicht in Figur 1 zeigt einen Ausschnitt eines bevorzugten Bohrhammers mit einem als Hammerrohr ausgebildeten Dreh- und/oder Schlagantrieb 20 im Bereich seiner Überlastkupplung als Schnitt. Auf dem Hammerrohr 20 sind eine Druckfeder 23, ein Stirnrad 18 und die Rastscheibe 10 angeordnet und über den Durchmesser des Hammerrohrs 20 gelagert. Das Hammerrohr 20 sorgt für eine Drehbewegung eines nicht dargestellten Werkzeugs. Die Rastscheibe 10 wird durch eine Druckfeder 23 gegen eine Sprengring 22 und somit gegen das Hammerrohr 20 gedrückt. Die Druckfeder 23 stützt sich über eine Stützscheibe 19 und einen Sprengring 21 nach vorne, in Richtung des Werkzeugs (nicht dargestellt) ab. Dadurch wird eine Axialkraft in das Hammerrohr 20 eingeleitet.

Eine Drehmitnahme der Rastscheibe 10 mit dem Hammerrohr 20 erfolgt über tangentiale Mitnahmestifte 24, welche in alls Quertaschen ausgebildete Mitnahmevorrichtungen 14 am inneren Umfang 12 der Rastscheibe 10 bzw. ihres Rastscheibenkörpers eingebettet sind.

Die ringförmig ausgebildete Rastscheibe 10 weist an ihrer Stirnfläche 13 Rastnocken 15 auf, die in das Stirnrad 18 eines Stirnradgetriebes eintauchen, wobei eine Laufverzahnung des Stirnrads 18 und die Rastnocken 15 axial übereinander liegen, wodurch sich eine vorteilhafte Funktionsüberlagerung ergibt.

Die Rastnocken 15 auf der Stirnfläche 13 der Rastscheibe 10 und die als Quertaschen ausgebildeten Mitnahmevorrichtungen 14 sind gegeneinander umfänglich versetzt, so dass sich eine maximale Mitnahmefläche der Rastnocken 15 ergibt.

Die Rastscheibe10 weist an ihrem Außendurchmesser eine festigkeitserhöhende Außenkontur 17 auf.

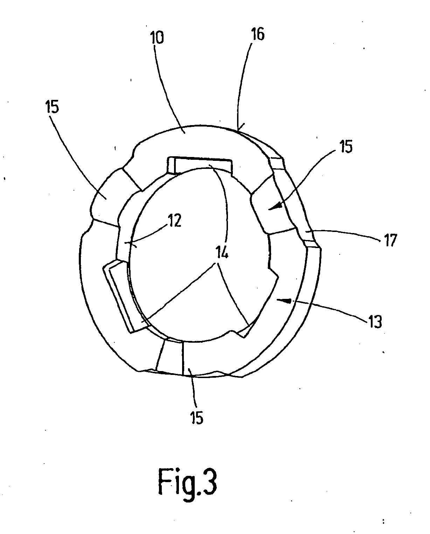

Die Eingriffshöhe der in das Stirnrad 18 eingetauchten Rastnocken 15 ist über den Fußkreis des Stirnrads 18 und eine notwendige Restwandstärke begrenzt. Diese Differenz kann für eine pulvermetallurgisch angepaßte, insbesondere sintergerechte Konstruktion der Rastscheibe 10 ausgenutzt werden und ermöglicht eine stabile Rastscheibe 10. Die Rastscheibe10 weist eine im Wesentlichen gleich bleibende Materialwandstärke auf, wie in den Figuren 2 und 3 zu erkennen ist. Oberhalb der als Quertaschen ausgebildeten Mitnahmevorrichtungen 14 und an den umfänglich versetzt angeordneten Rastnocken 15 weist die Rastscheibe 10 jeweils eine vergleichbare Wandstärke auf.

Das Auslösemoment der bevorzugten Überlastkupplung wird über die tangentialen Mitnahmestifte 24 auf das Hammerrohr 20 eingeleitet. Dieses Auslösemoment wird durch den gestuften Verlauf der Rastscheibe 10 aufgenommen. Dazu ist die Gestalt der Rastscheibe 10 so gewählt, dass die Außenkontur 17 außerhalb der Rastnocken 15 einen ähnlichen Durchmesser nachbildet wie einem Fußkreis einer Stirnradverzahnung des Stirnrads 18 entspricht.

## Patentansprüche

1. Rastscheibe für eine Überlastkupplun , insbesondere für eine Werkzeugmaschine, wobei die Rastscheibe eine im Wesentlichen gleich bleibende Materialwandstärke und wenigstens eine an einem inneren Umfang (12) ausgebildete Mitnahmevorrichtung (14) für eine Drehmitnahme aufweist **gekennzeichnet durch** eine pulvermetallurgisch gebildete Gestalt, , wobei die wenigstens eine Mitnahmevorrichtung (14) als Quertasche ausgebildet ist, welche zur Einbettung eines tangentialen Mitnahmenstiftes (14) vorgesehen ist.

2. Rastscheibe nach Anspruch 1, **gekennzeichnet durch** eine ringförmige Gestalt.

3. Rastscheibe nach einem der vorhergehenden Ansprüche, **gekennzeichnet durch** eine festigkeitserhöhende Außenkontur (17) an einem Außendurchmesser.

4. Rastscheibe nach einem der vorhergehenden Ansprüche, **gekennzeichnet durch** auf ihrer Ringfläche (13) angeordnete Rastnocken (15) und/oder Vertiefungen zur Aufnahme von Wälzkörpern.

5. Rastscheibe nach Anspruch 4, **dadurch gekennzeichnet, dass** die Rastnocken (15) und/oder Vertiefungen und die eine oder mehrere Mitnahmevorrichtungen (14) umfänglich gegeneinander versetzt sind.

6. Überlastkupplung, insbesondere für eine Werkzeugmaschine, wobei eine Drehmomentübertragung von einer Antriebseinheit auf ein Werkzeug mit einer Rastscheibe (10) nach mindestens einem der vorhergenden Ansprüche unterbrechbar ist.

7. Überlastkupplung nach Anspruch 6, **dadurch gekennzeichnet, dass** die Rastscheibe (10) an einer Stirnfläche (13) ihres Rastscheibenkörpers Rastnocken (15) und/oder Vertiefungen zur Aufnahme von Wälzkörpern aufweist, die in ein Stirnrad eines Stirnradgetriebes eintauchen, wobei eine Laufverzahnung des Stirnrads und die Rastnocken (15) axial übereinander liegen.

8. Überlastkupplung nach einem der Ansprüche 6 bis 7, **dadurch gekennzeichnet, dass** die Rastscheibe (10) an ihrer umfänglichen Außenkontur (16) im Bereich außerhalb der Rastnocken (15) und/oder Vertiefungen zur Aufnahme von Wälzkörpern einen ähnlichen Durchmesser nachbildet wie einem Fußkreis einer Stirnradverzahnung des Stirnrads entspricht.

9. Verfahren zur Herstellung einer Rastscheibe (10) nach mindestens einem der Ansprüche 1 bis 5 für eine Überlastkupplung, insbesondere für eine Werkzeugmaschine, **dadurch gekennzeichnet, dass** die Rastscheibe (10) durch ein formgebundenes pulvermetallurgisches Verfahren gebildet wird.

10. Werkzeugmaschine mit einer Überlastkupplung nach einem der Ansprüche 6 bis 8 mit einer Rastscheibe nach einem der Ansprüche 1 bis 5.

## Claims

1. Locking disc for an overload coupling, in particular for a power tool, wherein the locking disc has a substantially uniform material wall thickness and at least one driving device (14), formed on an inner circumference (12), for rotary driving, **characterized by** a shape produced by powder metallurgy, wherein the at least one driving device (14) is designed as a transverse pocket which is provided for embedding a tangential driving pin (24).

2. Locking disc according to Claim 1, **characterized by** an annular shape.

3. Locking disc according to either of the preceding claims, **characterized by** a strength-increasing outer contour (17) on an outside diameter.

4. Locking disc according to one of the preceding claims, **characterized by** locking lugs (15) and/or recesses, which are arranged on the annular surface (13) thereof and are intended for accommodating rolling elements.

5. Locking disc according to Claim 4, **characterized in that** the locking lugs (15) and/or recesses and the one or more driving devices (14) are offset from one another circumferentially.

6. Overload coupling, in particular for a power tool, wherein torque transmission from a drive unit to a tool can be interrupted with a locking disc (10) according to at least one of the preceding claims.

7. Overload coupling according to Claim 6, **characterized in that** the locking disc (10) has, on an end face (13) of the locking disc body thereof, locking lugs (15) and/or recesses for accommodating rolling elements which engage in a spur gear of a spur gear transmission, wherein a running tooth system of the spur gear and the locking lugs (15) are located axially one above the other.

8. Overload coupling according to either of Claims 6 and 7, **characterized in that** the locking disc (10), on the circumferential outer contour (16) thereof in the region outside the locking lugs (15) and/or recesses for accommodating rolling elements, simulates a diameter similar to a root circle of a spur gear tooth system of the spur gear.

9. Method for producing a locking disc (10) according to at least one of Claims 1 to 5 for an overload coupling, in particular for a power tool, **characterized in that** the locking disc (10) is formed by a mould-dependent powder metallurgical method.

10. Power tool having an overload coupling according to one of Claims 6 to 8 comprising a locking disc according to one of Claims 1 to 5.

## Revendications

1. Disque d'arrêt pour un embrayage de surcharge, en particulier pour une machine-outil, le disque d'arrêt présentant une épaisseur de paroi de matériau sensiblement uniforme et au moins un dispositif d'entraînement (14) pour un entraînement en rotation réalisé sur la périphérie intérieure (12), **caractérisé par** une configuration formée par métallurgie des poudres, l'au moins un dispositif d'entraînement (14) étant réalisé sous forme de cavité transversale qui est prévue pour l'incorporation d'une goupille d'entraînement tangentielle (24).

2. Disque d'arrêt selon la revendication 1, **caractérisé par** une configuration de forme annulaire.

3. Disque d'arrêt selon l'une quelconque des revendications précédentes, **caractérisé par** un contour extérieur (17) augmentant la résistance au niveau d'un diamètre extérieur.

4. Disque d'arrêt selon l'une quelconque des revendications précédentes, **caractérisé par** des cames d'encliquetage (15) et/ou des renfoncements disposés sur sa surface annulaire (13) pour recevoir des corps de roulement.

5. Disque d'arrêt selon la ' revendication 4, **caractérisé en ce que** les cames d'encliquetage (15) et/ou les renfoncements et le ou plusieurs dispositifs d'entraînement (14) sont décalés les uns par rapport aux autres sur la périphérie.

6. Embrayage de surcharge, en particulier pour une machine-outil, dans lequel un transfert de couple d'une unité d'entraînement à un outil peut être interrompu par un disque d'arrêt (10) selon au moins l'une quelconque des revendications précédentes.

7. Embrayage de surcharge selon la revendication 6, **caractérisé en ce que** le disque d'arrêt (10) présente, sur une surface frontale (13) de son corps de disque d'arrêt, des cames d'encliquetage (15) et/ou des renfoncements pour recevoir des corps de roulement, lesquels plongent dans un pignon droit d'une transmission à pignons droits, une denture de roulement du pignon droit et les cames d'encliquetage (15) étant superposées axialement.

8. Embrayage de surcharge selon l'une quelconque des revendications 6 à 7, **caractérisé en ce que** le disque d'arrêt (10) sur son contour périphérique extérieur (16) dans la région en dehors des cames d'encliquetage (15) et/ou des renfoncements pour recevoir des corps de roulement reproduit un diamètre similaire qui correspond à un cercle de base d'une denture de pignon droit du pignon droit.

9. Procédé de fabrication d'un disque d'arrêt (10) selon au moins l'une quelconque des revendications 1 à 5, pour un embrayage de surcharge, en particulier pour une machine-outil, **caractérisé en ce que** le disque d'arrêt (10) est formé par un procédé métallurgique de poudre associé au moulage.

10. Machine-outil comprenant un embrayage de surcharge selon l'une quelconque des revendications 6 à 8, comprenant un disque d'arrêt selon l'une quelconque des revendications 1 à 5.
